# FASCICULE DE BREVET EUROPEEN

(11) **EP 4 062 048 B1**
(45) Date de publication et mention de la délivrance du brevet: **29.11.2023**
(21) Numéro de dépôt: 20799770.1
(22) Date de dépôt: 15.10.2020
(51) Int. Cl.: F02N 11/04, H02J 7/14, F02D 41/08, H02P 9/00, F02D 29/06, F02N 11/08

(54) **PROCÉDÉ DE GESTION DU COUPLE PRÉLEVÉ SUR UN MOTEUR THERMIQUE PAR UN ALTERNATEUR**
VERFAHREN ZUR VERWALTUNG DES VON EINEM VERBRENNUNGSMOTOR ABGENOMMENEN DREHMOMENTS DURCH EINEN WECHSELSTROMGENERATOR
METHOD FOR MANAGING THE TORQUE TAKEN FROM AN INTERNAL COMBUSTION ENGINE BY AN ALTERNATOR

(30) Priorité: 20.11.2019 FR 1912928
(43) Date de publication de la demande: 28.09.2022
(73) Titulaire: PSA Automobiles SA, 78300 Poissy (FR)
(72) Inventeur: HABBANI, Ridouane, 92600 ASNIERES SUR SEINE (FR); BARDET, Arnaud, 78150 LE CHESNAY-ROCQUENCOURT (FR); FREIRE SUAREZ, Violette, 78150 LE CHESNAY-ROCQUENCOURT (FR); ROCQ, Gaetan, 78125 LA BOISSIERE ECOLE (FR); MILHAU, Yohan, 78630 ORGEVAL (FR); BASTIANI, Philippe, 78300 POISSY (FR)
(86) Numéro de dépôt international: PCT/FR2020/051831
(87) Numéro de publication internationale: WO 2021/099701

(56) Documents cités:
- EP-A1- 1 005 131
- FR-A1- 2 840 961
- FR-A1- 2 875 550
- JP-A- 2014 066 234
- US-A1- 2008 185 847

## Description

La présente invention concerne la gestion du redémarrage des moteurs thermiques en cas de calage. Plus particulièrement, l'invention a pour objet la gestion de couple prélevé sur un moteur thermique par un alternateur.

Les véhicules automobiles comprennent un moteur thermique et des consommateurs électriques. Les consommateurs électriques peuvent être alimentés par une batterie ou encore un alternateur. Cet alternateur est classiquement relié au moteur thermique par l'intermédiaire d'une courroie et produit de l'électricité pour alimenter les consommateurs électriques et/ou recharger la batterie en prélevant du couple au moteur thermique.

Cependant, en fonctionnement du moteur thermique ne doit pas descendre en dessous d'un seuil de régime. En effet le moteur thermique n'est exploitable qu'au-dessus de ce seuil de régime minimum, dit régime de ralenti.

Lors d'un besoin de production d'électricité, usuellement à une tension de 12V si les consommateurs ou la batterie fonctionne sous une tension de 12V, une consigne de couple est demandée à l'alternateur. Or dans certains cas, le moteur thermique peut ne pas être dans des conditions de fonctionnement optimales (ex : en altitude, par forte température, en mode dégradé, ...) et peut ne pas être capable de compenser totalement ce couple prélevé par l'alternateur. Dans ce cas, il peut survenir un calage du moteur.

Une solution pour empêcher le calage du moteur, connue du document FR2840961 A1 peut être de mettre hors service la fonction de production d'énergie électrique de -alternateur lorsque le capteur de vitesse détecte une vitesse de rotation du moteur en-dessous d'un seuil prédéterminé. Cependant cette solution peut ne pas être suffisante dans toute les situations de vie et le calage du moteur peut avoir lieu tout de même.

Dans la situation de vie de calage moteur une solution peut être de redémarrer le moteur sans délai une fois le moteur calé et de prélever de nouveau du couple par l'alternateur.

Cependant cette solution entraîne un risque de répétition en boucle de calage / redémarrage/ prélèvement de couple. En effet, lors du premier calage le moteur est redémarré aussitôt et relancent le prélèvement de couple par l'alternateur. La plupart du temps les mêmes causes entrainant les mêmes effets et le moteur cale à nouveau. On rentre alors dans une répétition en boucle de calage/redémarrage/prélèvement de couple.

L'invention vise à éviter le risque de répétition en boucle de calage / redémarrage/ prélèvement de couple par l'alternateur. Pour atteindre cet objectif, il est prévu selon l'invention un procédé de gestion de couple prélevé sur un moteur thermique par un alternateur pour produire de l'électricité afin de subvenir à un besoin électrique, le procédé comprenant les étapes de :
- détermination du besoin électrique,
- détermination et application d'une consigne de couple à prélever au moteur thermique par l'alternateur pour subvenir au besoin électrique déterminé, cette consigne étant progressive selon une première rampe de montée de couple,
caractérisé en ce que lorsqu'un calage du moteur thermique est détecté pendant la montée progressive de la consigne de couple à prélever, le moteur thermique est redémarré et une consigne de couple à prélever au moteur thermique par l'alternateur est appliquée selon une seconde rampe de montée de couple, cette seconde rampe étant inférieure à la première rampe appliquée avant le calage du moteur.

L'effet technique est de permettre, grâce à cette seconde rampe réduite par rapport à la première rampe, de laisser plus de temps au moteur thermique d'augmenter son couple en conséquence et donc de respecter sa consigne de régime optimale. Il en résulte l'annulation de l'effet de répétition de séquence de calage / redémarrage/ prélèvement de couple par l'alternateur.

Diverses caractéristiques supplémentaires peuvent être prévues, seules ou en combinaisons :
Selon une réalisation, le besoin électrique est traduit en couple à prélever au moteur thermique par l'alternateur.

Selon une réalisation, suite au calage du moteur thermique, son redémarrage est initié dès que le régime moteur devient nul.

Selon une réalisation, une consigne de régime moteur est déterminée à partir du besoin électrique et en ce que la seconde rampe de couple à prélever au moteur thermique est appliquée lorsque le régime moteur atteint la consigne de régime moteur.

Selon une réalisation, la seconde rampe est comprise entre 10% et 50% de la valeur de la première rampe.

Selon une réalisation, l'alternateur est un alterno-démarreur et le redémarrage est effectuée par cet alterno démarreur.

L'invention a également pour objet un calculateur électronique, comprenant les moyens d'acquisition, de traitement par instructions logicielles stockées dans une mémoire ainsi que les moyens de commande requis à mise en oeuvre d'un procédé selon l'une quelconque des variantes précédemment décrites.

L'invention a également pour objet un véhicule automobile comprenant un moteur thermique auquel est relié un alternateur, et comprenant un tel calculateur électronique.

D'autres particularités et avantages apparaîtront à la lecture de la description ci-après d'un mode particulier de réalisation, non limitatif de l'invention, faite en référence aux figures dans lesquelles :
[Fig 1] : La figure 1 représente une chaîne de traction de véhicule automobile
[Fig 2] : La figure 2 représente un chronogramme d'évolution de régime du moteur thermique et de couple prélevé par l'alternateur lors de la mise en oeuvre du procédé de l'invention.

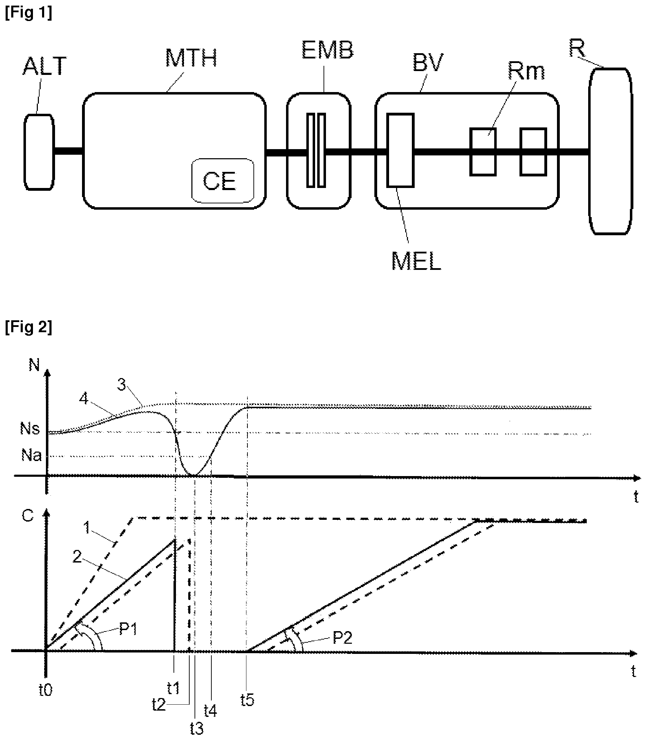

La figure 1 représente une chaîne de traction d'un véhicule automobile. La chaîne de traction comprend un moteur thermique, MTH, par exemple un moteur à allumage commandé ou à allumage par compression. Un alternateur ALT est relié au moteur thermique MTH. Classiquement l'alternateur ALT comprend un rotor entraîné en rotation par le moteur au moyen d'une courroie ou d'une chaîne. L'alternateur est relié à des moyens de stockage d'énergie électrique, telle qu'une batterie 12V (non représentée) et à des consommateurs électriques (non représentés). Par consommateurs électriques, on entend des organes du véhicule utilisant de l'énergie électrique. A titre d'exemple ces consommateurs électriques peuvent être des moyens d'éclairage, un calculateur, une radio, une résistance chauffante, une direction électrique, un moteur d'essuie-glace, etc...

L'alternateur permet de produire l'électricité en prélevant du couple au moteur thermique et de recharger moyens de stockage d'énergie électrique ou produire l'électricité pour les consommateurs électriques.

Le moteur thermique MTH est également relié à une boîte de vitesse BV reliant une embrayage EMB aux roues R via un ou plusieurs rapports de démultiplication Rm. L'embrayage EMB permet le décollage par le glissement entre le moteur MTH et la boite de vitesse BV.

La chaîne de traction peut encore comprendre une machine électrique MEL attelée à la boîte de vitesse BV. Dans ce cas la chaîne de traction est une chaîne de traction hybride thermique - électrique.

Cette chaine de traction peut comprendre un démarreur distinct de l'alternateur ALT, pour le démarrage du moteur thermique. L'alternateur ALT peut être un alternateur pouvant être piloté pour assurer le démarrage du moteur thermique. L'alternateur est alors désigné comme une alterno-démarreur.

Cette chaîne de traction comprend encore un calculateur CE comprenant les moyens d'acquisition, de traitement par instructions logicielles stockées dans une mémoire ainsi que les moyens de commande requis à mise en oeuvre du procédé de l'invention détaillé après.

La figure 2 présente un chronogramme montrant la gestion du couple prélevé sur le moteur thermique, par l'alternateur. Le graphe supérieure présente l'évolution du régime moteur N en fonction du temps t. Le graphe inférieur présente l'évolution du couple C en fonction du temps t. Le régime moteur N et le couple C s'exprime respectivement en tr/min et en N.m. Le temps s'exprime en seconde.

Sur la figure 2, la référence 1 indique un besoin électrique. Ce besoin en électricité est exprimé ici en couple à prélever sur le moteur thermique, par l'alternateur. Ce besoin électrique est déterminé en fonction de besoin en alimentation électrique des consommateurs activés et/ ou du besoin de recharge des moyens de stockage électrique. Ce besoin se traduit également par une consigne 3 de régime du moteur à suivre.

Ainsi, lors d'un besoin de production d'électricité, le calculateur CE détermine une consigne 2 de couple à demander à l'alternateur ALT. Afin de maitriser un bon compromis performance, agrément, consommation, acoustique, durabilité. Pour maitriser ce régime moteur, le prélèvement du couple par l'alternateur ALT se fait par avec une montée progressive, selon une première rampe linéaire de gradient P1.

Ainsi, dans l'exemple de la figure 2, entre les instants t0 et t1, pour subvenir au besoin électrique, on applique une consigne 2 de couple à prélever qui augmente progressivement selon la rampe de montée de couple de pente P1 pour tendre vers la consigne 1 de couple à prélever. Dans le même temps, le régime moteur N est mesuré (courbe 4).

Dans cette situation de vie on observe à l'approche de t1 une chute du régime moteur mesuré : le moteur thermique n'est pas capable de compenser totalement ce couple prélevé par l'alternateur.

Lors de la montée progressive de la consigne 2 de couple à prélever, à l'instant t1, le régime moteur passe sous un seuil de régime Ns, pour lequel on considère que le moteur est en cours de calage. Ce seuil de régime Ns peut être par exemple de 500 tr/min. A cet instant on annule la consigne 2 de couple à prélever par l'alternateur afin de permettre le redémarrage ultérieur du moteur thermique. En raison du temps de réponse du système le couple réellement prélevé par l'alternateur se prolonge au-delà de t1 jusqu'à l'instant t2.

A L'instant t3 le régime moteur est nul. Le redémarrage est ici amorcé dès que le régime moteur est nul, afin de réduire le temps sans production d'électricité. Le redémarrage commence par une phase de mise en rotation du moteur thermique qui peut être faite par le démarreur ou si l'alternateur ALT est un alterno-démarreur, par ce dernier. La mise en durant cette phase, le régime moteur augmente jusqu'à atteindre à l'instant t4 un seuil de régime Na pour lequel le moteur devient autonome, autrement dit qu'il peut poursuivre la montée en régime par sa combustion, désormais sans assistance du démarreur ou de l'alterno-démarreur.

A l'instant t5, le régime moteur réel 4 a atteint la consigne 5 de régime moteur. On décide à ce moment de recommencer alors à appliquer de nouveau une consigne de couple. Cette fois, la consigne 2 de couple à prélever au moteur thermique par l'alternateur est appliquée selon une seconde rampe, P2, de montée de couple, cette seconde rampe P2 étant inférieure à la première rampe P1 qui avait été appliquée avant le calage du moteur. Cette seconde rampe réduite par rapport à la première permet de laisser plus de temps au moteur thermique d'augmenter son couple en conséquence et donc de respecter sa consigne de régime optimale. Il en résulte l'annulation de l'effet de répétition de séquence de calage / redémarrage/ prélèvement de couple par l'alternateur.

La seconde rampe P2 de montée de couple peut être comprise entre 10% et 50% de la valeur de la première rampe P1. Ainsi pour un première rampe P1 de montée de couple de 500 N.m/s, la seconde rampe P2 peut être comprise entre 50 N.m/s et 250 N.m/s.

Cette stratégie permet d'éviter tout risque de répétition de séquence boucle de calage / redémarrage/ prélèvement de couple par l'alternateur à la suite d'un décollage ayant entraîné un premier calage du moteur thermique. Elle permet donc au moteur de respecter sa consigne de régime optimale permettant le respect des contraintes multi-prestations de performance, d'agrément, de consommation, d'acoustique, ou de durabilité. Notamment, elle permet :
- d'éviter les trous de couples, chocs ou oscillations occasionnés par des calages répétitifs du moteur.
- d'éviter les désagréments acoustique et vibratoire lors des calages.
- un meilleur suivi de consigne de couple conducteur et donc un meilleur agrément de conduite.
- une réduction du temps sans production d'électricité (en calant le moteur ne sait plus produire d'électricité)
- un meilleur compromis pollution/consommation en évitant les multiples redémarrages moteur.

## Revendications

1. Procédé de gestion de couple prélevé sur un moteur thermique (MTH) par un alternateur (ALT) pour produire de l'électricité afin de subvenir à un besoin électrique, le procédé comprenant les étapes de :
- détermination du besoin électrique,
- détermination et application d'une consigne (2) de couple à prélever au moteur thermique (MTH) par l'alternateur (ALT) pour subvenir au besoin électrique déterminé, cette consigne étant progressive selon une première rampe (P1) de montée de couple,
lorsqu'un calage du moteur thermique (MTH) est détecté pendant la montée progressive de la consigne (2) de couple à prélever, le moteur thermique (MTH) est redémarré et une consigne (2) de couple à prélever au moteur thermique (MTH) par l'alternateur (ALT) est appliquée selon une seconde rampe (P2) de montée de couple,
**caractérisé en ce que** cette seconde rampe (P2) est inférieure à la première rampe (P1) appliquée avant le calage du moteur.

2. Procédé selon la revendication 1, **caractérisé en ce que** le besoin électrique est traduit en couple à prélever au moteur thermique (MTH) par l'alternateur (ALT).

3. Procédé selon la revendication 1 ou la revendication 2, **caractérisé en ce que** suite au calage du moteur thermique (MTH), son redémarrage est initié dès que le régime moteur devient nul.

4. Procédé selon l'une quelconque des revendications précédentes, **caractérisé en ce qu'**une consigne (3) de régime moteur est déterminée à partir du besoin électrique et **en ce que** la seconde rampe (P2) de couple à prélever au moteur thermique (MTH) est appliquée lorsque le régime moteur atteint la consigne (3) de régime moteur.

5. Procédé selon l'une quelconque des revendications précédentes, **caractérisé en ce que** la seconde rampe (P1) est comprise entre 10% et 50% de la valeur de la première rampe (P1).

6. Procédé selon l'une quelconque des revendications précédentes, **caractérisé en ce que** l'alternateur est un alterno-démarreur et le redémarrage est effectuée par cet alterno démarreur.

7. Calculateur électronique (CE), **caractérisé en ce qu'**il comprend les moyens d'acquisition, de traitement par instructions logicielles stockées dans une mémoire ainsi que les moyens de commande requis à mise en oeuvre d'un procédé selon l'une quelconque des revendications précédentes.

8. Véhicule automobile comprenant un moteur thermique (MTH) auquel est relié un alternateur, **caractérisé en ce qu'**il comprend un calculateur électronique (CE) selon la revendication précédente.

## Patentansprüche

1. Verfahren zur Verwaltung des von einem Wärmemotor (MTH) durch einen Wechselstromgenerator (ALT) entnommenen Drehmoments zur Stromerzeugung zur Deckung eines elektrischen Bedarfs, wobei das Verfahren die folgenden Schritte umfasst:
- Bestimmung des Strombedarfs,
- Bestimmung und Anwendung eines Drehmomentsollwerts (2), der von der Wärmekraftmaschine (MTH) durch den Wechselstromgenerator (ALT) übernommen werden soll, um den ermittelten elektrischen Bedarf zu decken, wobei dieser Sollwert entsprechend einer ersten Rampe (P1) des Drehmomentanstiegs progressiv ist. wenn ein Abwürgen der Wärmekraftmaschine (MTH) während des allmählichen Anstiegs des zu übernehmenden Drehmomentsollwerts (2) erkannt wird, wird die Wärmekraftmaschine (MTH) neu gestartet und ein Drehmomentsollwert (2) von der Wärmekraftmaschine übernommen ( MTH) durch den Generator (ALT) wird entsprechend einer zweiten Drehmomentanstiegsrampe (P2) angelegt, **dadurch gekennzeichnet, dass** diese zweite Rampe (P2) niedriger ist als die erste Rampe (P1), die vor dem Abwürgen des Motors angewendet wird.

2. Verfahren nach Anspruch 1, **dadurch gekennzeichnet, dass** der elektrische Bedarf in Drehmoment umgewandelt wird, das vom Generator (ALT) aus der Wärmekraftmaschine (MTH) entnommen werden soll.

3. Verfahren nach Anspruch 1 oder Anspruch 2, **dadurch gekennzeichnet, dass** nach dem Abwürgen des Wärmemotors (MTH) dessen Wiederanlauf eingeleitet wird, sobald die Motordrehzahl auf Null sinkt.

4. Verfahren nach einem der vorhergehenden Ansprüche, **dadurch gekennzeichnet, dass** aus dem elektrischen Bedarf ein Motordrehzahlsollwert (3) ermittelt wird und dass die zweite Rampe (P2) des von der Wärmekraftmaschine (MTH) zu übernehmenden Drehmoments angewendet wird Die Motordrehzahl erreicht den Motordrehzahl-Sollwert (3).

5. Verfahren nach einem der vorhergehenden Ansprüche, **dadurch gekennzeichnet, dass** die zweite Rampe (P1) zwischen 10 % und 50 % des Wertes der ersten Rampe (P1) beträgt.

6. Verfahren nach einem der vorhergehenden Ansprüche, **dadurch gekennzeichnet, dass** der Generator ein Starter-Generator ist und der Neustart durch diesen Starter-Generator erfolgt.

7. Elektronischer Computer (EC), **dadurch gekennzeichnet, dass** er die Mittel zur Erfassung und Verarbeitung durch in einem Speicher gespeicherte Softwareanweisungen sowie die erforderlichen Steuermittel umfasst, um ein Verfahren gemäß einem der vorhergehenden Ansprüche durchzuführen.

8. Kraftfahrzeug mit einem Wärmemotor (MTH), an den ein Generator angeschlossen ist, **dadurch gekennzeichnet, dass** es einen elektronischen Computer (CE) gemäß dem vorhergehenden Anspruch umfasst.

## Claims

1. Method for managing torque taken from a heat engine (MTH) by an alternator (ALT) to produce electricity in order to meet an electrical need, the method comprising the steps of:
- determination of electrical needs,
- determination and application of a torque setpoint (2) to be taken from the heat engine (MTH) by the alternator (ALT) to meet the determined electrical need, this setpoint being progressive according to a first ramp (P1) of torque rise , when a stall of the heat engine (MTH) is detected during the gradual rise of the torque setpoint (2) to be taken, the heat engine (MTH) is restarted and a torque setpoint (2) to be taken from the heat engine ( MTH) by the alternator (ALT) is applied according to a second torque rise ramp (P2), **characterized in that** this second ramp (P2) is lower than the first ramp (P1) applied before the engine stalls.

2. Method according to claim 1, **characterized in that** the electrical requirement is translated into torque to be taken from the heat engine (MTH) by the alternator (ALT).

3. Method according to Claim 1 or Claim 2, **characterized in that** following the stalling of the thermal engine (MTH), its restart is initiated as soon as the engine speed drops to zero.

4. Method according to any one of the preceding claims, **characterized in that** an engine speed setpoint (3) is determined from the electrical requirement and **in that** the second ramp (P2) of torque to be taken from the heat engine (MTH) is applied when the engine speed reaches the engine speed setpoint (3).

5. Method according to any one of the preceding claims, **characterized in that** the second ramp (P1) is between 10% and 50% of the value of the first ramp (P1).

6. Method according to any one of the preceding claims, **characterized in that** the alternator is a starter-alternator and the restarting is carried out by this starter-alternator.

7. Electronic computer (CE), **characterized in that** it comprises the means for acquisition, processing by software instructions stored in a memory as well as the control means required to implement a method according to any one of the claims previous ones.

8. Motor vehicle comprising a heat engine (MTH) to which an alternator is connected, **characterized in that** it comprises an electronic computer (CE) according to the preceding claim.
